# EUROPÄISCHE PATENTSCHRIFT

(11) **EP 1 405 768 B1**
(45) Veröffentlichungstag und Bekanntmachung des Hinweises auf die Patenterteilung: **19.12.2007**
(21) Anmeldenummer: 02102411.2
(22) Anmeldetag: 02.10.2002
(51) Int. Cl.: B60R 16/02, H02J 7/14, H02J 7/16

(54) **Versorgungsnetz eines Kraftfahrzeugs mit einem Spannungskontrollsystem und Verfahren**
Energy supply net in a vehicle with a voltage control System and method of control
Réseau de bord d'un véhicule avec un système commande de tension ainsi qu'un procédé de commande

(43) Veröffentlichungstag der Anmeldung: 07.04.2004
(73) Patentinhaber: Ford Global Technologies, LLC, Dearborn, MI 48126 (US)
(72) Erfinder: Gaedt, Lutz Peter, 52499, Baesweiler (DE); Spijker, Engbert, 6361, BR Nuth (NL)
(74) Vertreter: Drömer, Hans-Carsten

(56) Entgegenhaltungen:
- EP-A- 0 688 698
- DE-A- 4 028 242
- FR-A- 2 687 511

## Beschreibung

Die Erfindung betrifft ein Verfahren zur Kontrolle der Spannung im Stromversorgungsnetz eines Kraftfahrzeuges, welches einen von der Brennkraftmaschine des Kraftfahrzeuges betriebenen Generator mit einer Generatorausgangsspannung sowie mindestens eine Batterie mit einer Batteriespannung enthält. Ferner betrifft die Erfindung ein Stromversorgungsnetz mit einer zur Durchführung des Verfahrens ausgebildeten Kontrolleinheit.

Die Stromversorgung elektrischer Verbraucher in einem Kraftfahrzeug wird bei laufender Brennkraftmaschine üblicherweise von einem Generator ("Lichtmaschine") sichergestellt, welcher mechanische Energie der Brennkraftmaschine in elektrische Energie umwandelt. Weiterhin enthalten die Stromversorgungsnetze von Kraftfahrzeugen üblicherweise eine wiederaufladbare Batterie, welche überschüssige Energie zwischenspeichert und diese in Phasen hohen Leistungsbedarfes oder bei ausgeschalteter Brennkraftmaschine wieder in das Netz einspeist. Problematisch ist dabei jedoch, dass die vom Generator erzeugte Generatorausgangsspannung und die von der Batterie erzeugte Batteriespannung in der Regel nicht gleich groß sind. Beim Übergang von der Versorgung durch den Generator auf die Versorgung durch die Batterie oder umgekehrt kommt es daher im Stromversorgungsnetz zu einem Spannungssprung, welcher in spannungsempfindlichen Verbrauchern wie etwa der Kraftfahrzeugbeleuchtung zu einer vom Fahrer als störend wahrgenommenen Leistungsänderung führt.

Die vorstehend beschriebene Störung beim Spannungswechsel ist insbesondere beim Stop-and-go-Betrieb eines Kraftfahrzeuges nachteilig, bei welchem die Brennkraftmaschine während Standzeiten des Fahrzeugs (z.B. vor einer Ampel) automatisch abgestellt und vor dem Anfahren durch einen leistungsfähigen Anlasser wieder gestartet wird. Ein solcher Betrieb führt zu einem häufigen Wechsel der Stromversorgung zwischen Generator und Batterie, wobei die elektrischen Verbraucher während der Auszeiten des Generators unverändert weiterbetrieben werden sollen. Da jeder Wechsel die oben beschriebenen Störungen im Verhalten elektrischer Verbraucher mit sich bringt, erschwert dies die Akzeptanz eines Stop-and-go-Betriebes, welcher an sich aus Gründen der Kraftstoffersparnis und der Emissionsreduktion wünschenswert ist.

Aus der FR 2 687 511 ist ein Verfahren zum Regeln oder Steuern einer Bordnetzspannung in Kraftfahrzeugen bekannt, bei dem vorgesehen ist, eine Änderungsgeschwindigkeit der Bordnetzspannung in Abhängigkeit eines Zu- oder Abschaltens eines Generators zu begrenzen. Zu diesem Zweck ist vorgesehen, zum Zeitpunkt des Abschaltens des Generators entweder eine Umschaltung auf eine Hilfsbatterie vorzunehmen, oder die Hilfsbatterie bei Zuschalten eines Verbrauchers mit hohem Leistungsbedarf (des Anlassers für die Brennkraftmaschine) einen von der Hilfsbatterie gespeisten Stromkreis abzutrennen, oder die niedrigere Spannung der Hauptbatterie mit Hilfe eines Spannungsreglers auf das von den übrigen elektrischen Verbrauchern benötigte Spannungsniveau anzuheben.

Insbesondere, offenbart das Dokument FR 2 687 511 ein Verfahren zur Kontrolle der Spannung im Stromversorgungsnetz eines Kraftfahrzeuges, welches einen von der Brennkraftmaschine des Kraftfahrzeuges betriebenen Generator mit einer Generatorausgangsspannung sowie mindestens eine Batterie mit einer Batteriespannung enthält, wobei eine durch einen Aktivitätswechsel des Generators verursachte Spannungsänderung in ihrer Steigung und/oder ihrer Höhe reduziert wird.

Vor diesem Hintergrund war es eine Aufgabe der vorliegenden Erfindung, ein Stromversorgungsnetz eines Kraftfahrzeuges bereitzustellen, bei welchem störende Spannungssprünge bei Übergängen zwischen Generator- und Batteriebetrieb reduziert oder sogar ganz ausgeschaltet werden.

Diese Aufgabe wird durch ein Verfahren mit den Merkmalen des Patentanspruches 1 sowie durch ein Stromversorgungsnetz mit den Merkmalen des Patentanspruches 9 gelöst.

Vorteilhafte Ausgestaltungen sind in den Unteransprüchen enthalten.

Das erfindungsgemäße Verfahren dient der Kontrolle der Spannung im Stromversorgungsnetz eines Kraftfahrzeuges, wobei das Netz mindestens einen von der Brennkraftmaschine des Kraftfahrzeuges betriebenen Generator, welcher eine Generatorausgangsspannung erzeugt, sowie mindestens eine Batterie, welche eine Batteriespannung bereitstellt, enthält. Das Verfahren ist dadurch gekennzeichnet, dass die durch einen Aktivitätswechsel des Generators verursachte Spannungsänderung im Stromversorgungsnetz in ihrer Steigung und/oder ihrer Höhe bzw. Amplitude reduziert wird, indem vor einer Deaktivierung des Generators die Spannung im Stromversorgungsnetz rampenförmig auf das Niveau der Batteriespannung geregelt wird und/oder mindestens ein am Stromversorgungsnetz angeschlossener Verbraucher in seiner Leistungsaufnahme gedrosselt wird.

Unter einem "Aktivitätswechsel" des Generators ist dabei dessen Deaktivieren und/oder Aktivieren zu verstehen, bei welchem sein mechanischer Antrieb zum Beispiel durch Ausschalten/Anschalten der Brennkraftmaschine beendet/begonnen wird, so dass auch die Spannungserzeugung des Generators endet/beginnt.

Das beschriebene Verfahren behält den grundsätzlichen Betrieb des Stromversorgungsnetzes bei, bei dem die Energieentnahme vom Generator auf die Batterie umgestellt wird, wenn der Generator (zum Beispiel wegen des Ausschaltens der Brennkraftmaschine) keinen Strom mehr erzeugen kann. Ferner wird hierbei grundsätzlich auch der Wechsel des Spannungsniveaus zwischen der Generatorspannung und der (in der Regel kleineren) Batteriespannung zugelassen. Der Übergang zwischen den beiden Spannungsniveaus wird jedoch geglättet und/oder abgestuft, das heißt "weicher" gestaltet, so dass an den Verbrauchern keine Störung durch die Spannungsänderung mehr auftritt.

Typischerweise ist die Generatorspannung um etwa 1 bis 3 V höher als die Batteriespannung. Diese Situation wird der nachfolgenden Erläuterung schwerpunktmäßig zugrunde gelegt, wobei die Lehren der Erfindung jedoch mit den entsprechenden Änderungen auch auf den umgekehrten Fall angewendet werden können.

Vorzugsweise werden bei dem Verfahren die Änderungsraten der Spannung im Stromversorgungsnetz auf weniger als 2 V/s reduziert. Besonders bevorzugt ist eine Änderungsrate von ca. 1 V/s. Es hat sich gezeigt, dass eine derart begrenzte Spannungsänderung an einem spannungsempfindlichen Verbraucher wie etwa der Innenbeleuchtung des Kraftfahrzeuges vom Fahrer nicht mehr (als störend) wahrgenommen wird. Andererseits ist eine Änderungsrate von ca. 1 V/s so groß, dass der Spannungsunterschied von typischerweise 1 bis 3 V in kurzer Zeit überbrückt ist und daher keine langwierigen Maßnahmen erforderlich sind.

Die gewünschte Glättung eines Spannungsüberganges zwischen der Generator spannung und der Batteriespannung kann technisch auf verschiedene Weisen erreicht werden, welche zudem noch miteinander kombiniert werden können. Gemäß einem ersten hier vorgestellten Ansatz wird die Spannung im Stromversorgungsnetz kurze Zeit vor dem Deaktivieren des Generators rampenförmig auf das Niveau der Batteriespannung geregelt und/oder nach dem Aktivieren des Generators rampenförmig auf das Niveau der Generatorspannung geregelt. Unter einem "rampenförmigen" Übergang zwischen zwei Spannungsniveaus soll in diesem Zusammenhang allgemein jeder stetige Übergang ohne Sprünge und ohne Überschreiten einer maximalen Spannungsänderungsrate verstanden werden. Insbesondere fällt hierunter ein rampenförmiger Übergang im engeren Sinne, bei welchem zwei unterschiedliche Spannungsniveaus durch einen linearen Spannungsverlauf miteinander verbunden werden. Wenn die Batteriespannung wie üblich niedriger ist als die Generatorspannung, beinhaltet obiges Vorgehen eine Absenkung der Spannung im Netz vor dem Deaktivieren des Generators. Ein solches Vorgehen lässt sich insbesondere beim Stop-and-go-Betrieb eines Kraftfahrzeuges vorteilhaft anwenden, da hierbei das Ausschalten der Brennkraftmaschine, welches das Deaktivieren des Generators verursacht, automatisch aufgrund vorgegebener Kriterien erfolgt. Das Auftreten dieser Kriterien kann daher automatisch und vorausschauend erkannt werden, so dass die Spannung wie gewünscht kurze Zeit vor dem Deaktivieren des Generators bereits verändert werden kann und das Abschalten der Brennkraftmaschine die Stromversorgung nicht "unvorbereitet" trifft.

Ergänzend kann ein zweites Verfahren zur Begrenzung der Spannungsänderungsrate beim Deaktivieren oder Aktivieren des Generators für ein Stromversorgungsnetz angewendet werden, das (mindestens) in ein erstes und ein zweites Teilnetz unterteilt ist, wobei die Teilnetze jeweils eine Batterie enthalten. In diesem Falle kann nach dem Ausschalten des Generators die Spannung im ersten Teilnetz mit Hilfe der Batterie des zweiten Teilnetzes rampenförmig (im oben definierten Sinne) auf das neue Niveau geregelt werden.

Zumindest im ersten Teilnetz kann somit das Auftreten eines störenden Spannungssprunges vermieden werden.

Vorzugsweise werden bei dem vorstehenden Verfahren im ersten Teilnetz Verbraucher mit einer hohen Empfindlichkeit gegenüber Spannungsänderungen angeschlossen. Diese Verbraucher sind daher vor störenden Spannungsänderungen geschützt.

Weiterhin wird bei dem Verfahren im zweiten Teilnetz vorzugsweise eine Batterie angeschlossen, die eine höhere Leistungsfähigkeit als die Batterie im ersten Teilnetz aufweist. Diese höhere Leistungsfähigkeit kann dann dazu ausgenutzt werdden, den kurzzeitigen Leistungsbedarf während des Aktivitätswechsels des Generators im ersten Teilnetz zu befriedigen.

Bei einem dritten Ansatz zur Minderung störender Spannungswechsel wird mindestens ein am Stromversorgungsnetz angeschlossener Verbraucher vor einem Aktivitätswechsel (Deaktivieren und/oder Aktivieren) des Generators in seiner Leistungsaufnahme reduziert. Auch dieses Verfahren bietet sich insbesondere bei einem Stop-and-go-Betrieb des Fahrzeugs an, bei welchem das Deaktivieren des Generators automatisch "vorgesehen" werden kann. Durch die Reduzierung der Leistungsaufnahme von Verbrauchern am Stromversorgungsnetz wird die Belastung des Netzes verringert, so daß die Batteriespannung weniger stark absinkt. Die Höhe der Spannungsänderung zwischen Batterie- und Generatorspannung ist daher sehr viel kleiner, so daß sie sich an spannungsempfindlichen Verbrauchern weniger störend bemerkbar macht.

Gemäß einer Weiterbildung des vorstehend beschriebenen Verfahrens wird der mindestens eine in seiner Leistungsaufnahme reduzierte Verbraucher nach dem Aktivitätswechsel des Generators in seiner Leistungsaufnahme wieder auf das ursprüngliche Niveau hochgefahren. Dies stellt sicher, daß der Verbraucher seine Aufgabe nach kurzer Zeit in der gewünschten Weise weiterführt. Durch seine zwischenzeitliche Leistungsreduktion kann die Spannungsänderung jedoch über eine Zwischenstufe und damit weniger sprungartig ausgeführt werden. Vorzugsweise wird die Leistungsaufnahme des Verbrauchers rampenförmig (im oben erläuterten Sinne) wieder auf das ursprüngliche Niveau hochgefahren, so daß kein wahrnehmbarer Sprung in der Spannung durch das Hochfahren entsteht.

Für die Leistungsreduktion vor dem Aktivitätswechsel des Generators eignen sich insbesondere Verbraucher mit einer hohen Leistungsaufnahme, bei denen sich eine transiente Leistungsreduktion nicht störend bemerkbar macht. Beispiele hierfür sind die Heizung und/oder ein Kühlaggregat des Kraftfahrzeuges.

Die Erfindung betrifft weiterhin ein Stromversorgungsnetz für ein Kraftfahrzeug, welches mindestens einen von der Brennkraftmaschine des Kraftfahrzeuges betriebenen Generator mit einer Generatorausgangsspannung sowie mindestens eine Batterie mit einer Batteriespannung enthält. Das Stromversorgungsnetz ist dadurch gekennzeichnet, daß es eine Kontrolleinheit aufweist, die zur Durchführung eines Verfahrens der oben erläuterten Art eingerichtet ist.

Bei der Kontrolleinheit kann es sich insbesondere um einen Mikrocontroller oder Mikroprozessor handeln, welcher über die erforderlichen Ein- und Ausgänge mit dem Stromversorgungsnetz, der Brennkraftmaschine und/oder den angeschlossenen Verbrauchern gekoppelt und in geeigneter Weise programmiert ist. Das heißt, daß die Kontrolleinheit insbesondere beim Deaktivieren und/oder Aktivieren des Generators die Spannungsänderung im Stromversorgungsnetz in ihrer Steigung und/oder Höhe reduziert. Insbesondere kann die Kontrolleinheit dabei mit dem Regelungssystem eines Stop-and-go-Betriebes zusammenwirken, so daß sie ein bevorstehendes Ausschalten der Brennkraftmaschine vorzeitig erkennt und hierauf mit einer Änderung der Spannung und/oder einer Änderung der Leistungsaufnahme von Verbrauchern reagieren kann. Weiterhin kann die Kontrolleinheit dahingehend ausgebildet sein, bei einem Stromversorgungsnetz, das zwei Teilnetze mit jeweils einer Batterie aufweist, eine Spannungsänderung in einem der Teilnetze unter Rückgriff auf die Batterie des anderen Teilnetzes zu glätten.

Im Folgenden wird die Erfindung mit Hilfe der Figuren beispielhaft näher erläutert. Es zeigen:
- Fig. 1: schematisch das Stromversorgungsnetz eines Kraftfahrzeuges, welches aus zwei Teilnetzen A, B aufgebaut ist;
- Fig. 2: den Spannungsverlauf in einem der Teilnetze von Figur 1 bei Rückgriff auf die Batterie des anderen Teilnetzes während der Deaktivierung des Generators;
- Fig. 3: die Reduzierung der Leistungsaufnahme eines Verbrauchers (oben) und den resultierenden Spannungsverlauf im Stromversorgungsnetz (unten) während der Deaktivierung des Generators, und
- Fig. 4: den Spannungsverlauf im Stromversorgungsnetz bei einer Anpassung der Spannung während der Deaktivierung des Generators.

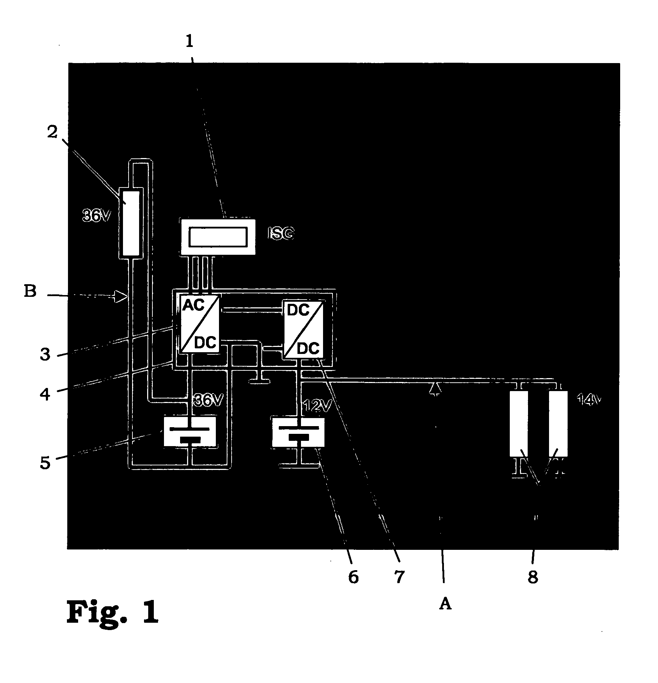

In Figur 1 ist schematisch das Stromversorgungsnetz ("Bordnetz") eines Kraftfahrzeuges dargestellt. Die Erzeugung elektrischer Energie für das Stromversorgungsnetz erfolgt durch einen mit einer Brennkraftmaschine (nicht dargestellt) gekoppelten Generator 1. Im dargestellten Fall handelt es sich hierbei speziell um einen integrierten Starter-Generator 1, welcher je nach Betriebsweise elektrische Energie in mechanische umwandelt (Starter) oder umgekehrt mechanische Energie in elektrische (Generator). Dieser kann zum Beispiel über einen Riemen an die Welle der Brennkraftmaschine gekoppelt oder zwischen Kupplung und Brennkraftmaschine unmittelbar in die Welle integriert sein.

Der Starter-Generator 1 ist mit einem Spannungsgleichrichter 3 in einer Kontrolleinheit 4 verbunden. Die Ausgangsseite des Gleichrichters 3 speist über einen Spannungswandler 7 ein erstes Teilnetz A mit einer (wiederaufladbaren) 12 V Batterie 6 sowie 14 V Verbrauchern 8. Weiterhin speist der Gleichrichter 3 ausgangsseitig direkt ein zweites Teilnetz B, in welchem eine 36 V Batterie 5 und 36 V Verbraucher 2 angeschlossen sind. Eine derartiges Stromversorgungsnetz wird auch als "14/42 V Architektur" bezeichnet.

Wenn die Brennkraftmaschine des Kraftfahrzeuges ausgeschaltet wird, hat der Starter-Generator 1 keinen aktiven Antrieb, so daß dieser keine elektrische Energie mehr in das Stromversorgungsnetz einspeisen kann. Die Energieversorgung geht daher auf die Batterien 5 beziehungsweise 6 über. Dabei kommt zum Tragen, daß die jeweiligen Batteriespannungen in der Regel 1 bis 3 V geringer als die ins Netz eingespeiste Generatorspannung ist. Mit dem Deaktivieren des Starter-Generators 1 tritt daher ein Spannungssprung entsprechender Höhe ein. Dieser macht sich insbesondere an bestimmten 14 V Verbrauchern 8 wie etwa der Fahrzeuginnenbeleuchtung oder den Scheibenwischern störend bemerkbar, indem es zum Beispiel zu einem Flackern der Beleuchtung oder einem Rucken der Scheibenwischer kommt.

Besonders häufig und daher nachteilig sind diese durch Spannungssprünge verursachten Störungen bei einem Betrieb des Kraftfahrzeuges im Stop-and-go-Modus, bei welchem zur Einsparung von Kraftstoff und zur Reduzierung von Abgasemissionen die Brennkraftmaschine bei einem Halt des Kraftfahrzeuges (zum Beispiel im Stau oder vor einer Ampel) abgeschaltet wird und der Starter-Generator 1 daher ausläuft. Beim anschließend erneuten Aktivieren von Brennkraftmaschine und Starter-Generator 1 tritt dann ein Spannungssprung in umgekehrter Richtung ein, welcher sich ebenfalls störend bemerkbar macht.

Bei dem in Figur 1 dargestellten, aus zwei Teilnetzen A, B bestehenden Stromversorgungsnetz wäre es grundsätzlich möglich, die Spannung im 14 V Teilnetz A unter Rückgriff auf die 36 V Batterie 5 auch bei ausgeschaltetem Generator 1 durchgehend auf dem ursprünglichen Niveau zu halten. Dies wäre jedoch energetisch ungünstig, da die Energie der 36 V Batterie 5 ins 14 V Netz A dissipiert würde.

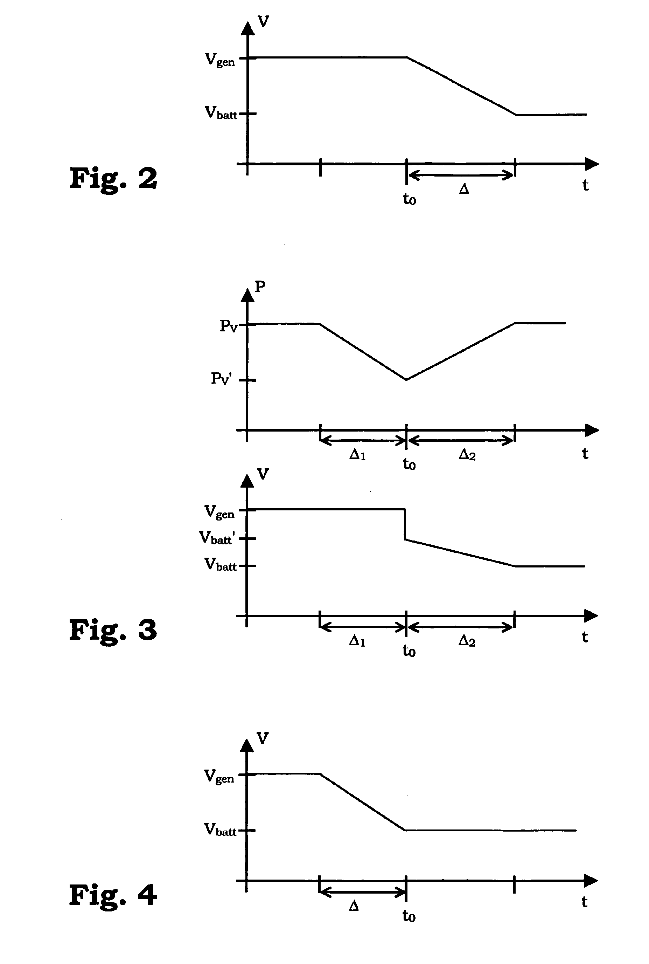

Erfindungsgemäß wird daher vorgeschlagen, den beim Deaktivieren oder Aktivieren des Generators 1 auftretenden Spannungssprung abzustufen und/oder zu glätten, damit die hierdurch verursachten Änderungen an spannungsempfindlichen Verbrauchern 8 unter die Wahrnehmbarkeitsschwelle gesenkt werden. Für eine derartige Beeinflussung der Spannungsänderung stehen verschiedene Möglichkeiten zur Verfügung, von denen nachfolgend drei mit Hilfe der Figuren 2 bis 4 beispielhaft erläutert werden sollen.

In Figur 2 ist der Verlauf der Spannung V im Teilnetz A über der Zeit t aufgetragen. Zum Zeitpunkt t₀ soll die Brennkraftmaschine ausgeschaltet werden, so daß gleichzeitig die Spannungserzeugung vom Starter-Generator 1 endet. Die Spannung V im Teilnetz A sinkt daher von der Generatorspannung V_{gen} ≈ 14 V auf die Batteriespannung V_{batt} ≈ 12 V der Batterie 6 ab. Im Normalfall würde dies sprungartig geschehen und dabei die oben erläuterten störenden Effekte an den Verbrauchern 8 verursachen.

Erfindungsgemäß wird die Spannungsänderung V_{gen} → V_{batt} dagegen unter Rückgriff auf die Batterie 5 des Teilnetzes B rampenförmig über ein bei t₀ beginnendes Zeitintervall Δ verteilt. Die Steigung der Rampe hat dabei vorzugsweise einen Wert von 1 V/s. Es hat sich gezeigt, daß Spannungsänderungen mit dieser Rate an der Beleuchtung etc. nicht mehr zu wahrnehmbaren Veränderungen führen. Die Störung durch den Spannungsübergang von V_{gen} zu V_{batt} wird daher eliminiert, ohne daß eine energetisch ungünstige ständige Spannungserhöhung im Teilnetz A erforderlich wäre. Vorteilhaft ist bei diesem Vorgehen auch, daß die erforderlichen Maßnahmen erst nach Deaktivieren des Starter-Generators 1 eingeleitet werden müssen.

Das in Figur 2 dargestellte Verfahren lässt sich auch bei zweiteiligen Stromversorgungsnetzen anwenden, bei welchen beide Netze die gleiche Spannung (zum Beispiel 14 V/14 V) aufweisen. In diesen Fällen werden sämtliche spannungsempfindliche elektrische Verbraucher an ein Teilnetz A mit einer Batterie hoher Energie angeschlossen. Die übrigen Verbraucher sind an das andere Teilnetz B angeschlossen, welches eine Batterie hoher Leistungsfähigkeit enthält. Auf diese Batterie kann dann nach einem Deaktivieren des Generators zurückgegriffen werden, um die Spannung im Teilnetz A rampenförmig auf das Batterieniveau abzusenken, so daß keine störenden Effekte an den dortigen spannungsempfindlichen Verbrauchern auftreten. Umgekehrt kann bei einem Neustart der Brennkraftmaschine die Ausgangsspannung der Leistungselektronik langsam erhöht werden, so daß die Spannung rampenförmig wieder auf das Niveau der Generatorspannung ansteigt.

Figur 3 zeigt die Leistungsaufnahme P eines an das Stromversorgungsnetz angeschlossenen Verbrauchers 8 (oberes Diagramm) sowie den resultierenden Verlauf der Spannung V (unteres Diagramm) über der Zeit t. Das Netz kann dabei wie in Figur 1 dargestellt aus zwei Teilnetzen A, B bestehen (in diesem Fall ist V die Spannung im Teilnetz A) oder aber auch als einheitliches Netz ausgebildet sein. Der Zeitpunkt t₀ soll wiederum das Abschalten der Brennkraftmaschine beziehungsweise Deaktivieren des Starter-Generators 1 bezeichnen.

Bei dem Verfahren von Figur 3 wird eine Zeitdauer Δ₁ von typischerweise 2-3 Sekunden vor dem Abschalten der Brennkraftmaschine (Zeitpunkt t₀) die Leistungsaufnahme des Verbrauchers von einem ersten Wert Pᵥ auf einen geringeren Wert Pᵥ' reduziert. Vorzugsweise geschieht diese Reduktion rampenförmig über die Zeitdauer Δ₁ verteilt, damit sich diese nicht als Sprung in der Netzspannung V bemerkbar macht, sondern von dem Gleichrichter 3 ausgeglichen werden kann. Gegebenenfalls kann der Verbraucher auch ganz abgeschaltet werden (Pᵥ' = 0).

Nach dem Deaktivieren des Generators (Zeitpunkt t₀) wird die Leistungsaufnahme des Verbrauchers wieder rampenförmig über eine Zeitdauer Δ₂ auf das ursprüngliche Niveau Pᵥ hochgefahren, so daß der Verbraucher seine ursprüngliche Funktion wieder unverändert fortsetzen kann. Geeignete Verbraucher für dieses Vorgehen sind z.B. die Heizung oder ein Klimaaggregat des Kraftfahrzeuges, da diese einerseits eine hohe Leistungsaufnahme und damit ein großes Änderungspotential bereitstellen und andererseits ihre Funktion gegenüber einer kurzzeitigen Leistungsänderung nicht sensibel ist.

Die beschriebene Reduktion der Leistungsaufnahme des Verbrauchers von Pᵥ auf Pᵥ' hat zur Folge, daß sich die Belastung des Stromversorgungsnetzes verringert. Der zum Zeitpunkt t₀ stattfindende Sprung in der Spannung des Versorgungsnetzes führt daher nur über eine verhältnismäßig geringe Höhe von der Generatorspannung V_{gen} zu einem ersten Wert V_{batt}', welcher der Batteriespannung einer gering belasteten Batterie entspricht. Durch die nach t₀ stattfindende langsame Lasterhöhung sinkt die Batteriespannung dann rampenförmig (aufgrund des Innenwiderstandes der Batterie) auf ihren neuen Wert V_{batt}. Das entsprechende Absinken der Spannung V im Stromversorgungsnetz führt jedoch nicht mehr zu als störend wahrgenommenen Effekten. Durch die vorübergehende Leistungsreduktion bestimmter Verbraucher kann somit insgesamt der Übergang von der Generatorspannung V_{gen} zur Batteriespannung V_{batt} abgestuft und geglättet werden.

Um die Leistungsaufnahme eines Verbrauchers einen Zeitraum Δ₁ vor dem Deaktivieren des Generators reduzieren zu können, muss der Abstellzeitpunkt t₀ der Brennkraftmaschine vorab bekannt sein. Bei einer durch Drehen des Zündschlüssels manuell abgestellten Brennkraftmaschine könnte zu diesem Zweck beispielsweise eine entsprechende Verzögerung des Abschaltens der Brennkraftmaschine um Δ₁ erfolgen. Insbesondere ist das beschriebene Verfahren jedoch in Verbindung mit einem Stop-and-go-Betrieb des Kraftfahrzeuges einsetzbar, da hierbei das Abschalten der Brennkraftmaschine automatisch aufgrund bestimmter Kriterien erfolgt. Diese Kriterien erlauben in der Regel eine ausreichend frühzeitige kennung eines bevorstehenden Ausschaltens der Brennkraftmaschine, so daß reagierende Maßnahmen eingeleitet werden können. So beruhen die für einen Stop-and-go-Betrieb eingesetzten Start/Stop-Strategien üblicherweise auf zwei primären Eingaben, nämlich der Fahrzeuggeschwindigkeit und dem Zustand des Bremspedals. Wenn die Fahrzeuggeschwindigkeit Null und die Bremse gedrückt ist, wird die Brennkraftmaschine nach einer gewissen Leerlaufzeit, die aus Effizienzgründen zum Beispiel bei 1 bis 3 Sekunden liegt, abgeschaltet. Natürlich können weitere Faktoren die Strategie beeinflussen, zum Beispiel der Temperaturzustand der Brennkraftmaschine oder des Katalysators, um das Abschalten einer noch nicht warm gelaufenen Brennkraftmaschine zu verhindern.

Die beschriebene vorrausschauende Leistungsreduktion des Verbrauchers kann analog auch beim Neustart des Generators 1 erfolgen.

Ein vorausschauendes Reagieren auf das Abschalten der Brennkraftmaschine zu einem Zeitpunkt t₀ ist auch bei dem Verfahren nach Figur 4 erforderlich. In dieser Figur ist wiederum die Spannung V im (ein- oder mehrteiligen) Stromversorgungsnetz über der Zeit t dargestellt. Wie zu erkennen ist, wird diese Spannung einen Zeitraum Δ vor dem Deaktivieren des Generators (Zeitpunkt t₀) rampenförmig auf das Niveau der Batteriespannung V_{batt} reduziert. Der bei t₀ stattfindende Übergang der Stromversorgung vom Generator auf die Batterie führt daher zu keinem Spannungssprung mehr. Auch hier wird die Rampe vorzugsweise mit einer Änderungsrate von ca. 1 V/s ausgeführt, um einerseits eine hinreichend schnelle und andererseits eine nicht wahrnehmbare Spannungsänderung herbeizuführen.

In einem zweiteiligen Stromversorgungsnetz gemäß Figur 1 könnte die beschriebene Absenkung der Spannung im spannungsempfindlichen Teilnetz A zum Beispiel durch eine entsprechende Ansteuerung des Gleichspannungswandlers 7 erfolgen. Von besonderem Wert ist dieses Verfahren indes bei einteiligen Stromversorgungsnetzen wie etwa einem herkömmlichen 14 V-Netz.

Nach dem erneuten Anschalten des Generators 1 (nicht dargestellt) kann die Spannung V analog rampenförmig auf V_{gen} erhöht werden.

Zur Durchführung der oben beschriebenen Verfahren muss die in Figur 1 dargestellte Kontrolleinheit 4 nacheinander die folgenden Schritte im Antriebsstrang koordinieren:
a. Leistungsaufnahme von Verbrauchern 8 reduzieren (Figur 3) und/oder Leistungserzeugung des Starter-Generators 1 reduzieren (Figur 4).
b. Kupplung öffnen.
c. Brennkraftmaschine abstellen.
d. Gegebenenfalls Spannung im Netz unter Rückgriff auf die Batterie eines separaten Teilnetzes senken (Figur 1).

Die anhand der Figuren erläuterten Maßnahmen können analog auch bei einem Aktivieren des Generators eingesetzt werden.

## Patentansprüche

1. Verfahren zur Kontrolle der Spannung im Stromversorgungsnetz (A, B) eines Kraftfahrzeuges, welches einen von der Brennkraftmaschine des Kraftfahrzeuges betriebenen Generator (1) mit einer Generatorausgangsspannung (Vgen) sowie mindestens eine Batterie (5, 6) mit einer Batteriespannung (Vbatt) enthält, wobei eine durch einen Aktivitätswechsel des Generators verursachte Spannungsänderung in ihrer Steigung und/oder ihrer Höhe reduziert wird, indem vor (Δ) einer Deaktivierung des Generators (1) die Spannung im Stromversorgungsnetz (A, B) rampenförmig auf das Niveau der Batteriespannung (Vbatt) geregelt wird und/oder mindestens ein am Stromversorgungsnetz angeschlossener Verbraucher (8) in seiner Leistungsaufnahme gedrosselt wird.

2. Verfahren nach Anspruch 1,
**dadurch gekennzeichnet, dass**
die Spannungsänderung auf eine Rate von weniger als 2 V/s, vorzugsweise auf ca. 1 V/s, reduziert wird.

3. Verfahren nach Anspruch 1 oder 2,
**dadurch gekennzeichnet, dass**
die Spannung (V) im Versorgungsnetz nach dem Aktivieren des Generators (1) rampenförmig auf das neue Niveau geregelt wird.

4. Verfahren nach mindestens einem der Ansprüche 1 bis 3,
**dadurch gekennzeichnet, dass**
das Stromversorgungsnetz in ein erstes Teilnetz (A) und ein zweites Teilnetz (B) unterteilt ist, welche jeweils eine Batterie (5, 6) enthalten, und dass nach dem Deaktivieren des Generators (1) die Spannung im ersten Teilnetz (A) mit Hilfe der Batterie (6) des zweiten Teilnetzes (B) rampenförmig auf das neue Niveau geregelt wird.

5. Verfahren nach Anspruch 4,
**dadurch gekennzeichnet, dass**
im ersten Teilnetz (A) Verbraucher (8) mit einer hohen Empfindlichkeit gegenüber Spannungsänderungen angeschlossen sind.

6. Verfahren nach Anspruch 4 oder 5,
**dadurch gekennzeichnet, dass**
im zweiten Teilnetz (B) eine Batterie (5) höherer Leistungsfähigkeit als im ersten Teilnetz (A) angeschlossen ist.

7. Verfahren nach Anspruch 1,
**dadurch gekennzeichnet, dass**
der Verbraucher (8) nach dem Aktivitätswechsel des Generators (1) in seiner Leistungsaufnahme wieder auf das ursprüngliche Niveau hochgefahren wird.

8. Verfahren nach Anspruch 7,
**dadurch gekennzeichnet, dass**
es sich bei dem Verbraucher (8) um eine Heizung und/oder ein Klimaaggregat des Kraftfahrzeuges handelt.

9. Stromversorgungsnetz (A, B) für ein Kraftfahrzeug, enthaltend einen von der Brennkraftmaschine des Kraftfahrzeuges betriebenen Generator (1) mit einer Generatorspannung (Vgen) sowie mindestens eine Batterie (5, 6) mit einer Batteriespannung (Vbatt),
**dadurch gekennzeichnet, dass**
dieses eine Kontrolleinheit (4) enthält, die dahingehend ausgebildet ist, ein Verfahren nach mindestens einem der Ansprüche 1 bis 8 auszuführen.

## Claims

1. Method for controlling the voltage in the power supply network (A, B) of a motor vehicle which contains a generator (1), which is operated by the internal combustion engine of the motor vehicle and has a generator output voltage (Vgen), and at least one battery (5, 6) with a battery voltage (Vbatt), with the rate and/or magnitude of the change in voltage which is caused by a change in activity of the generator being reduced by the voltage in the power supply network (A, B) being adjusted in ramped fashion to the level of the battery voltage (Vbatt) and/or the power consumption of at least one load (8) which is connected to the power supply network being restricted before deactivation of the generator (1).

2. Method according to Claim 1, **characterized in that** the change in voltage is reduced to a rate of less than 2 V/s, preferably to approximately 1 V/s.

3. Method according to Claim 1 or 2, **characterized in that** the voltage (V) in the power supply network is adjusted in ramped fashion to the new level after activation of the generator (1).

4. Method according to at least one of Claims 1 to 3, **characterized in that** the power supply network is divided into a first sub-network (A) and a second sub-network (B), which sub-networks each contain a battery (5, 6), and **in that** the voltage in the first sub-network (A) is adjusted in ramped fashion to the new level with the aid of the battery (6) of the second sub-network (B) after deactivation of the generator (1).

5. Method according to Claim 4, **characterized in that** loads (8) with a high sensitivity to changes in voltage are connected in the first sub-network (A).

6. Method according to Claim 4 or 5, **characterized in that** a battery (5) with a higher capacity than in the first sub-network (A) is connected in the second sub-network (B).

7. Method according to Claim 1, **characterized in that** the power consumption of the load (8) is raised back to the original level after the change in activity of the generator (1).

8. Method according to Claim 7, **characterized in that** the load (8) is a heater and/or an air-conditioning unit of the motor vehicle.

9. Power supply network (A, B) for a motor vehicle, comprising a generator (1), which is operated by the internal combustion engine of the motor vehicle and has a generator voltage (Vgen), and at least one battery (5, 6) with a battery voltage (Vbatt), **characterized in that** said power supply network contains a control unit (4) which is designed to execute a method according to at least one of Claims 1 to 8.

## Revendications

1. Procédé de contrôle de la tension dans un réseau d'alimentation électrique (A, B) d'un véhicule automobile, lequel comprend un alternateur (1) entraîné par le moteur à combustion interne du véhicule automobile avec une tension de sortie d'alternateur (Vgen) et au moins une batterie (5, 6) avec une tension de batterie (Vbatt), la pente et/ou l'amplitude d'une variation de tension provoquée par un changement d'activité de l'alternateur étant réduite en ce qu'avant de désactiver l'alternateur (1), la tension dans le réseau d'alimentation électrique (A, B) est régulée sous la forme d'une rampe au niveau de la tension de batterie (Vbatt) et/ou en ce que la puissance consommée par au moins une charge (8) raccordée au réseau d'alimentation électrique est réduite.

2. Procédé selon la revendication 1, **caractérisé en ce que** la variation de tension est réduite à un taux de moins de 2 V/s, de préférence à environ 1 V/s.

3. Procédé selon la revendication 1 ou 2, **caractérisé en ce que** la tension (V) dans le réseau d'alimentation est régulée sous forme de rampe sur le nouveau niveau après l'activation de l'alternateur (1).

4. Procédé selon l'une des revendications 1 à 3, **caractérisé en ce que** le réseau d'alimentation électrique est divisé en un premier réseau partiel (A) et un deuxième réseau partiel (B), lesquels comprennent respectivement une batterie (5, 6) et **en ce qu'**après la désactivation de l'alternateur (1), la tension dans le premier réseau partiel (A) est régulée sous forme de rampe sur le nouveau niveau à l'aide de la batterie (6) du deuxième réseau partiel (B).

5. Procédé selon la revendication 4, **caractérisé en ce que** des charges (8) très sensibles aux variations de tension sont branchées dans le premier réseau partiel (A).

6. Procédé selon la revendication 4 ou 5, **caractérisé en ce qu'**une batterie (5) ayant une capacité de charge supérieure à celle du premier réseau partiel (A) est branchée dans le deuxième réseau partiel (B).

7. Procédé selon la revendication 1, **caractérisé en ce que** la puissance consommée par la charge (8) est de nouveau amenée à son niveau originel après le changement d'activité de l'alternateur (1).

8. Procédé selon la revendication 7, **caractérisé en ce que** la charge (8) est un équipement de chauffage et/ou un groupe de climatisation du véhicule automobile.

9. Réseau d'alimentation électrique (A, B) pour un véhicule automobile, comprenant un alternateur (1) entraîné par le moteur à combustion interne du véhicule automobile avec une tension d'alternateur (Vgen) et au moins une batterie (5, 6) avec une tension de batterie (Vbatt), **caractérisé en ce qu'**il comprend une unité de contrôle (4) qui est conçue pour mettre en oeuvre un procédé selon au moins l'une des revendications 1 à 8.
